# EUROPEAN PATENT SPECIFICATION

(11) **EP 3 398 274 B1**
(45) Date of publication and mention of the grant of the patent: **29.09.2021**
(21) Application number: 16701591.6
(22) Date of filing: 22.01.2016
(51) Int. Cl.: H04L 1/00, H04L 25/497, H04L 27/26

(54) **SYSTEM-MATCHED ADAPTED CODING AND EQUALIZATION APPARATUS AND METHOD**
VORRICHTUNG UND VERFAHREN ZUR AUF SYSTEM ABGESTIMMTEN, ANGEPASSTEN CODIERUNG UND ENTZERRUNG
APPAREIL ET PROCÉDÉ DE CODAGE ET D'ÉGALISATION ADAPTÉS MIS EN CORRESPONDANCE AVEC UN SYSTÈME

(43) Date of publication of application: 07.11.2018
(73) Proprietor: Huawei Technologies Co., Ltd., Longgang District Shenzhen, Guangdong 518129 (CN)
(72) Inventor: ZHANG, Qiang, 80992 Munich (DE); LIU, Ning, 80992 Munich (DE); ZHOU, Enbo, 80992 Munich (DE); XIE, Changsong, 80992 Munich (DE)
(74) Representative: Pfenning, Meinig & Partner mbB
(86) International application number: PCT/EP2016/051297
(87) International publication number: WO 2017/125165

(56) References cited:
- EP-A1- 2 348 661
- EP-A2- 1 533 965

## Description

### TECHNICAL FIELD

The present invention relates to an apparatus and method for performing adaptive coding for signal transmission via a transmission system, such as - but not limited to ― a fiber optical transmission system.

### BACKGROUND

Free-space, direct detection, optical intensity-modulated channels offer interesting new challenges. Most practical wireless optical channels use light-emitting diodes as transmitters and photo diodes as detectors. These devices modulate and detect solely the intensity of the carrier, not its phase, which implies that all transmitted signal intensities are non-negative. Furthermore, biological safety considerations constrain the average radiated optical power, thereby constraining the average signal amplitude. Both, multipath distortion in signal propagation and limited response times of optoelectronics create sharp constraints on the channel bandwidth. Conventional signal-space models and coded modulation techniques for electrical channels cannot be applied directly, since they do not take the signal amplitude constraints into consideration. Conventional transmission techniques optimized for broad-band optical channels (e.g., optical fibers) are not generally bandwidth-efficient.

In optical communications, intensity modulation (IM) is a form of modulation in which the optical power output of a source is varied in accordance with some characteristic of the modulation signal. The envelope of the modulated optical signal is an analogue of the modulating signal in the sense that the instantaneous power of the envelope is an envelope of the characteristic of interest in the modulation signal. Recovery of the modulating signal is usually achieved by direct detection. The growing demand for highspeed data transmission systems has introduced new design paradigms for optical communications. The need for low-complexity and cost-effective systems has modulated the usage of affordable optical hardware (e.g., incoherent transmitters, optical intensity modulators, multimode fibers, direct-detection receivers) to design short-haul optical fiber links (e.g., fiber to the home and optical interconnects) and diffused indoor wireless optical links. These devices impose three important constraints on the signaling design. First, the transmitter only modulates information on the instantaneous intensity of an optical carrier, contrary to conventional coherent channels where the amplitude and phase of the carrier can be used to send information. In the receiver, only the optical intensity of the incoming signal will be detected. Due to these limitations, the transmitted signals must be non-negative. Such transmission is called "intensity modulation with direct detection" (IMDD). Second, the peak and average optical power (i.e., the peak and average of the transmitted signal in the electrical domain) must be below a certain threshold for eye- and skin-safety concerns and to avoid non-linearities present in the devices. In conventional channels, such constraints are usually imposed on the peak and average of the squared electrical signal. Third, the bandwidth is limited to the impairments in the optoelectronic devices and other limitations (e.g., modal dispersion in short-haul optical fiber links and multipart distortion in diffused indoor wireless optical links). Consequently, the coherent modulation formats and pulse shape methods designed for conventional electrical channels (i.e., with no non-negativity constrained on the transmitted signal) cannot be directly applied to IMDD channels.

With increased demands of wireless data exchange, the data rate for metro-range applications also increases. Wavelength Division Multiplexing (WDM) (where a number of optical carriers are multiplexed onto a single optical fiber by using different wavelengths of laser light) in metropolitan area networks (MANs) is very sensitive to costs. Thus, cost is the first point for the system, so that IMDD has become the common approach to reduce the costs of the system. To realize a long distance transmission (e.g. larger than 40 km), the C-band is selected because of the lowest loss in the communication windows. But, in IMDD systems, the chromatic dispersion (CD) induced power fading phenomenon strongly reduces performance and makes it a challenge to realize high data rates (e.g. larger than 40 Gbps) transmissions without dispersion compensation fiber (DCF).

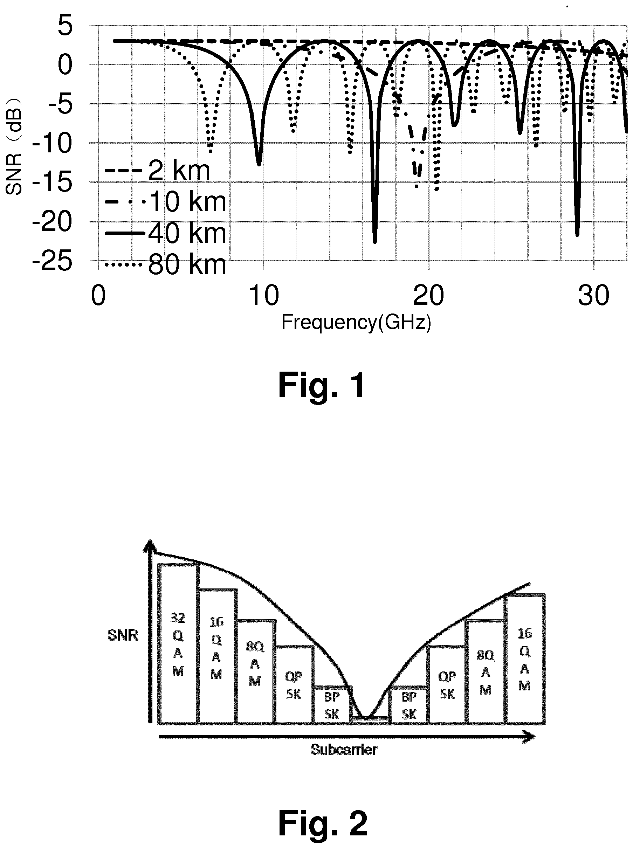

Fig. 1 shows a transfer function (signal-to-noise ratio (SNR) vs. frequency) of a fiber in an IMDD system in the C-band for different distances of 2 km, 10 km, 40 km and 80 km. As can be gathered from the transfer function of Fig. 1, the resulting CD-induced power fading leads to very selective spectral areas for transmission.

To reduce the penalty of such power fading, two technologies are commonly used. The first one is a discrete multi-tone (DMT) technology. DMT divides the whole spectrum into hundreds of subcarriers and each subcarrier can be regarded as a single tone with flat transfer function. The modulation format and power of the different subcarriers are adjusted independently. This technology can match the system well.

Fig. 1 shows a schematic transfer function of the SNR vs. subcarrier frequency for a DMT technology which is well-matched to the general characteristic. Based on the spectral shape of the transfer function, subcarriers with different modulation formats (32QAM, 16QAM, 8QAM, QPSK, BPSK) are used. However, because of the large number of subcarriers, the peak to average power ratio (PAPR) is very high. This will degrade sensitivity or required optical SNR (OSNR) in IMDD systems. Moreover, the position of the subcarriers is fixed, so that DMT systems are not flexible enough.

The second common technology is a single carrier system with a maximum likelihood sequence estimation (MLSE). This technology can achieve lower PAPR, but when the inter-symbol interference (ISI) is long, memory length also increases. This leads to a large increase in complexity.

EP 2,348,661 A1 discloses a wireless communication terminal apparatus wherein even when an SC-FDMA signal is divided into a pluratity of clusters and the plurality of clusters are then mapped to respective discontinuous frequency bands (when C-SC-FDMA is used), the improvement effect of system throughput can be maintained, while the user throughput can be improved.

EP 1,533,965 A2 discloses a method and apparatus for controlling adaptive modulation and coding in an OFDM communication system in which an entire frequency band is divided into a plurality of sub-carrier bands.

### SUMMARY

It is an object of the present invention to provide an apparatus and method for performing adaptive coding for signal transmission via a transmission system, by means of which system performance can be increased in transmission systems with high power fading.

The foregoing and other objects are achieved by the features of the independent claims. Further implementation forms are apparent from the dependent claims, the description and figures.

According to a first aspect there is provided an apparatus for performing adaptive coding for signal transmission via a transmission system, said apparatus comprising a spectrum analyzer for obtaining a fading characteristic of a transmission spectrum available for said signal transmission; a spectrum divider for dividing said available transmission spectrum into at least two subbands in accordance with said fading characteristic; and a modulation selector for selecting a modulation format for each of said at least two subbands based on a transmission characteristic of the subband.

According to a first implementation of the apparatus according to the first aspect, the spectrum analyzer is adapted to initiate transmission of a broadband signal and to analyze a power spectrum obtained from the broadband signal to derive the fading characteristic. Thereby, the actual fading characteristic can be directly measured and analyzed to optimize the matching operation to the current general characteristic. According to a second implementation of the apparatus according to the first implementation of the first aspect or the first aspect as such, the modulation selector is adapted to determine at least a signal power spectrum and a noise power spectrum of each of the at least two subbands, and to select the modulation format for each of the at least two subbands based on a desired target power spectrum. Thereby, a modulation format which is well matched to the noise characteristic and desired target power spectrum is used for each respective subband so as to improve transmission performance and allow transmission of higher data rates.

According to a third implementation of the apparatus according to any preceding implementation of the first aspect or the first aspect as such, the modulation selector is adapted to select the modulation format from the group comprising at least a phase amplitude modulation, quadrature amplitude modulation, quadrature phase shift keying and binary phase shift keying. These specific modulation formats can be well adapted to the different subbands arising from CD-induced power fading in IMDD systems or similar transmission systems.

According to a second aspect, there is provided an apparatus for performing adaptive duo-binary equalization for signal reception via a transmission system, said apparatus comprising a quality estimator for estimating signal quality of respective different modulation formats used on at least two subbands of a transmission spectrum available for said signal reception; and a selector for selecting an equalization method for said signal reception based on a comparison of signal qualities estimated for said at least two subbands. According to a first implementation of the apparatus according to the second aspect, the quality estimator is adapted to calculate a signal-to-noise ratio for the different equalization methods. The signal-to-noise ratio provides a good and reliable parameter for estimating signal quality of the different modulation formats and can be used as a good basis for comparison of the signal qualities of the different subbands.

According to a second implementation of the apparatus according to the first implementation of the second aspect, the selector is adapted to determine respective bit error rates for each of the different equalization methods and to select an equalization method which leads to a minimum bit error rate.

According to a third implementation of the apparatus according to the second implementation of the second aspect, the bit error rates is determined by using a look-up table or other storage facility in which SNRs and related bit error rates are stored for the available different equalization methods. Thereby, the selection operation can be facilitated by a simple memory access operation and comparison of the retrieved results for the different equalization methods.

According to a fourth implementation of the apparatus according to any preceding implementation of the second aspect as such, the different equalization methods comprise a duo-binary equalization method. This provides the advantage that the duo-binary equalization method leads to a better system match, since a filtering effect of the transmission channel can be exploited by this equalization method to improve system performance.

According to a third aspect, the invention relates to a transmitter device comprising an apparatus according to any implementation of the first aspect or the first aspect as such. According to a fourth aspect, the invention relates to a receiver device comprising an apparatus according to any implementation of the second aspect as such.

According to a fifth aspect, there is provided a method of performing adaptive coding for signal transmission via a transmission system, said method comprising obtaining a fading characteristic of a transmission spectrum available for said signal transmission; dividing said available transmission spectrum into at least two subbands in accordance with the fading characteristic; and selecting a modulation format for each of said at least two subbands based on a transmission characteristic of the subband.

Accordingly, at the transmitter side, an obtained fading characteristic of a transmission spectrum available for signal transmission is considered when the available transmission spectrum is divided into at least two subbands and a modulation format for each of the at least two subbands is selected based on the transmission characteristic of the subband. Thus, the proposed solution combines the advantages of DMT and single carrier technology by providing an adaptive match to the channel and a lower PAPR.

According to a sixth aspect, there is provided a method of performing adaptive duo-binary equalization for signal reception via a transmission system, said method comprising estimating signal quality of respective different modulation formats used on at least two subbands of a transmission spectrum available for said signal reception; and selecting an equalization method for said signal reception based on a comparison of signal qualities estimated for said at least two subbands.

Accordingly, at the receiver side, signal quality of respective different modulation formats used on the at least two subbands of the available transmission spectrum is estimated and an equalization method for the signal reception is selected based on a comparison of signal qualities estimated for the at least two subbands. Thereby, system performance can be optimized by matching the equalization method to the respective subband of the available spectrum of the transmission system.

According to a seventh aspect, the invention relates to a computer program comprising a program code for performing the methods according to the fifth or sixth aspects when executed on a computer. Thus, the methods can be performed in an automatic and repeatable manner.

It is noted that the above apparatus at the transmitter side and the above apparatus at the receiver side may be implemented based on discrete hardware circuitry with discrete hardware components, integrated chips, or arrangements of chip modules, or based on a signal processing device or chip controlled by a software routine or program stored in a memory, written on a computer-readable medium, or downloaded from a network, such as the internet. The above apparatuses may be implemented without signal transmission or receiving capability simply for controlling the transmission or reception function of a corresponding transmitter device or receiver device.

The computer program can be performed by the apparatus. The apparatus can be programmably arranged to perform the computer program.

Embodiments of the invention can be implemented in hardware, software or any combination thereof.

It shall further be understood that a preferred embodiment of the invention can also be any combination of the dependent claims or above embodiments with the respective independent claim.

These and other aspects of the invention will be apparent and elucidated with reference to the embodiments described hereinafter.

### BRIEF DESCRIPTION OF THE DRAWINGS

In the following detailed portion of the present disclosure, the invention will be explained in more detail with reference to exemplary embodiments shown in the drawings, in which:
- Fig. 1: shows a diagram with different transfer functions of an optical fiber for different lengths in C-band for an IMDD system;
- Fig. 2: shows diagram with a transfer function of a conventional DMT technology and different modulation formats matched to the transfer function;
- Figs. 3A and 3B: show transfer functions of an IMDD system and a multicarrier duo-binary signal for different fiber lengths;
- Fig. 4: shows a schematic diagram of an adaptive equalization scheme according to first embodiment;
- Fig. 5: shows a schematic block diagram of a transmission signal generation process for a transmission signal with different modulation formats in different subbands according to a second embodiment;
- Fig. 6: shows a schematic diagram of a selection procedure for the adaptive equalization method according to a third preferred embodiment;
- Fig. 7: shows a schematic block diagram of an adaptive coding and equalization system according to a fourth preferred embodiment;
- Fig. 8: shows a schematic block diagram of a transmitter device for an adaptive coding and equalization system according to a fifth embodiment; and
- Fig. 9: shows a schematic block diagram of a receiver device for an adaptive coding and equalization system according a sixth embodiment.

Identical reference signs are used for identical or at least functionally equivalent features.

### DETAILED DESCRIPTION

Various embodiments of the present invention will now be described based on an IMDD system for an optical fiber in the C-band frequency range.

In the embodiments, the signal spectrum can be modified by inducing some known ISI in a partial response (PR) system. In PR signaling, also called duo-binary signaling or correlative coding, the idea is to introduce a controlled amount of ISI into the signal rather than trying to eliminate it completely. This can be compensated for at the receiver, thereby achieving better symbol-rate packing without the requirement of unrealizable filters. Pre-coding may optionally be used to eliminate error spreading.

A PR channel is characterized by a transfer function which is dependent on a delay operator D. For instance, the so-called duo-binary system or type 1 or class 1 PR system corresponds to the case of a transfer function G(D)=1+D. A type 1 PR system can be used in communication systems with narrower bandwidth, such as optical communication or optical filtering systems. In this case, the spectral profile of the type 1 PR channel is similar to the power fading profile, so that each fading band can be used as a PR channel. The duo-binary signal is a three-level signal with levels "-1", "0" and "1", wherein only the predetermined sequences (-1, 0, 1) or (1, 0, -1) can occur, which makes the duo-binary signal resilient to dispersion.

In the embodiments it is suggested to combine the advantages of the conventional DMT and single carrier technologies to achieve an adaptive channel match at low PAPR. At the receiver side, PR equalization can be used to improve system performance. When a randomly distributed signal is transmitted, the signals become related due to the 1+D channel response, which leads to an extra filter effect and an increase in signal constellations at the receiver, as explained later. The increased number of constellations can be exploited by adopting duo-binary coding and decoding for the different subbands of the transfer function shown in Fig. 1. Thereby, lower PAPR and higher flexibility can be achieved.

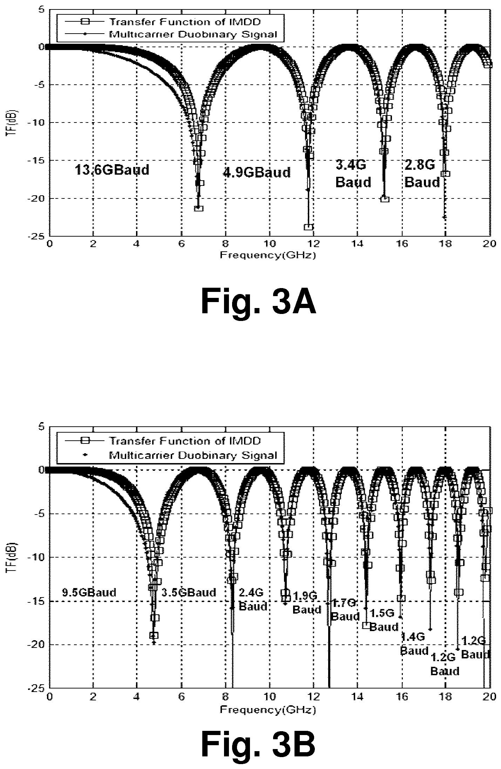

Figs. 3A and 3B show diagrams with transfer functions of an IMDD system and a multicarrier duo-binary signal for a fiber length of 40 km (Fig. 3A) and a fiber length of 80 km (Fig. 3B). As can be gathered from Figs. 3A and 3B, the duo-binary signal matches the system transfer function quite well. In general, the cut-off frequency of a duo-binary signal is half of the baud rate. That is, for the 40 km scenario of Fig. 3A, the first cut-off frequency is 6.8 GHz, so that the baud rate of the first subband is 13.6 GBd. Similarly, the baud rate of other bands can be calculated by the frequencies of the neighbored fading point, i.e., the frequency point where the transfer function of the IMDD system shows a minimum. In telecommunication and electronics, baud is the unit for symbol rate or modulation rate in symbols per second or pulses per second. It is the number of distinct symbol changes (signaling events) made to the transmission medium per second in a digitally modulated signal or a line code.

In case of a fiber length of 20 km, the fading frequencies (i.e., frequencies at the minima of the transfer function) are 13.6 GHz and 23.9 GHz, so that two subcarriers of 27.2 GBd and 10.3 GBd and pulse amplitude modulation (PAM) with four constellations (i.e., PAM 4) can be used. In this case, due to the additional filtering effect of the IMDD system, the modulation changes to duo-binary-PAM4 with seven levels. This means that the IMDD channel filters the signal from PAM4 to duo-binary-PAM4, which can be exploited when using a corresponding equalization method.

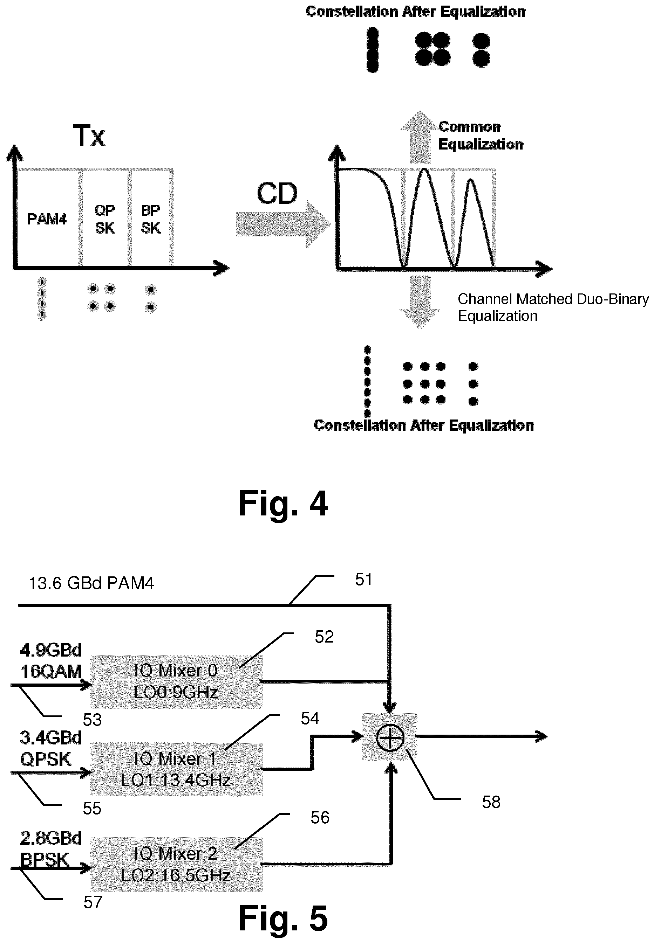

Fig. 4 shows an adaptive equalization scheme according to an embodiment. At the transmitter (Tx) side, the transmitted signal is divided into three subbands to match the IMDD system. Due to the different characteristics of the subbands, different modulation formats are used. In the left subband, PAM4 with four different amplitude constellations is used, while in the middle subband quadrature phase shift keying (QPSK) is used with four different constellations in phase and amplitude domains, and in the right subband, binary phase shift keying (BPSK) with two amplitude constellations is used. Due to the CD of the IMDD channel, the transmission signal with the different modulation formats in the different subbands will be subjected to the transfer function with the specific fading characteristic of the IMDD system, so that the constellations will be blurred during transmission and the SNR will be reduced if a common equalization method is used, as indicated in the upper right part of Fig. 4. However, if a channel matched duo-binary equalization is used at the receiver side, the number of constellations of the received signal will increase and a better system performance can be achieved, as indicated in the lower right part of Fig. 4.

In the adaptive equalization scheme of the embodiment of Fig. 4, an extra cosine filter may be added for each subband. Due to the increase in constellations when a signal is transmitted through the IMDD channel, the PAM4 modulation format is modified to a duo-binary-PAM4 modulation format with an enhanced constellation of seven levels. Furthermore, the QPSK modulation format is modified to a 9QAM modulation format with 9 constellation points. Due to the expanded constellation, the SNR of the respective subband may need to be increased. This means that the equalization method at the receiver side depends on the available SNR. Therefore, it is suggested to select the equalization method based on the available SNR of the respective subband.

Fig. 5 shows a schematic block diagram of the generation process of the transmission signal at the transmitter side according to a further embodiment.

According to Fig. 5, the transmission signal consists of four signal components which are transmitted in different subbands and which are added or combined in a signal combiner 58 which may be implemented by any suitable adding or combination stage or element for the respective frequency ranges. In the upper branch 51, a transmission signal with PAM4 modulation format and 13.6 GBd is directly added without any mixing stage. In a second branch 53, a transmission signal with modulation format 16 QAM and 4.9 GBd is supplied to a first in-phase and quadrature-phase (IQ) mixer 52 with a first local oscillator with 9 GHz oscillation frequency. In a third branch 55, a transmission signal with QPSK modulation format and 3.4 GBd is supplied to a second IQ mixer with a second local oscillator with an oscillation frequency of 13.4 GHz, and in the fourth or lowest branch 57, a transmission signal with BPSK modulation format and 2.8 GBd is supplied to a third IQ mixer 56 with a third local oscillator with oscillation frequency 16.5 GHz. The IQ mixers 52, 54 and 56 serve to mix the signals of the second to fourth branch 53, 55, 57 into the required frequency ranges of the subbands used for transmission of the modulated transmission signal components.

The selection of the modulation formats for each of the available subbands can be controlled based on the spectral characteristics of each subband to achieve a required data rate and/or transmission power, as explained later.

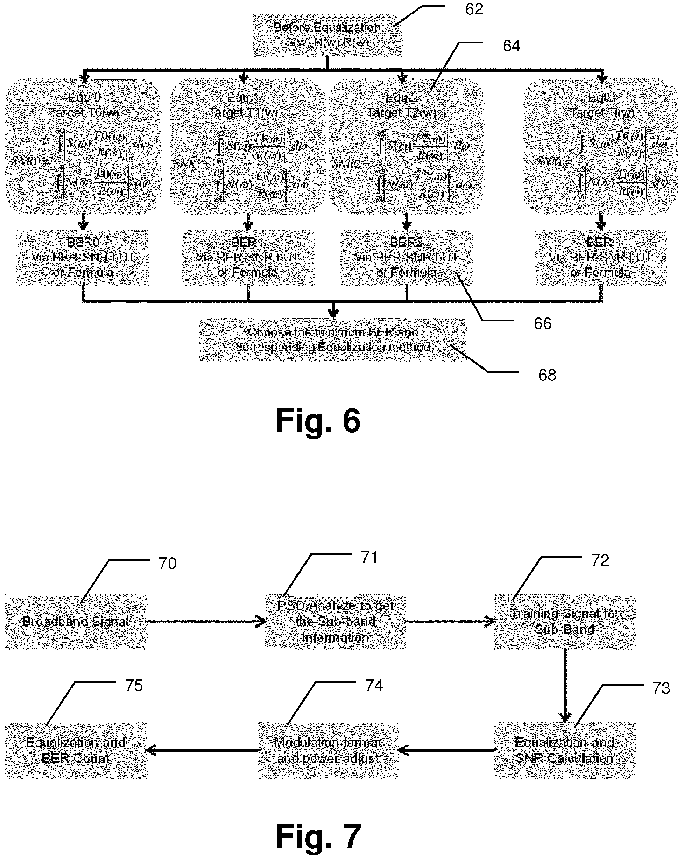

Fig. 6 shows a schematic block diagram of a selection process for equalization methods at the receiver side according to a further embodiment. Initially, in step 62 a training sequence is transmitted through the transmission channel in order to obtain power spectrum densities (PSD) S(ω) of the signal, N(ω) of the noise and R(ω) of the total signal including the noise, where the parameter ω designates the angular frequency. Then, in steps 64 signal-to-noise ratios SNR0 to SNRi are calculated for all available candidates of equalization methods which can be used at the receiver side. For each of these equalization candidates, different target PSDs T0(ω), T1(ω) ... Ti(ω) are provided, on the basis of which the SNR values are calculated by using respective equations indicated in blocks of steps 64. Then, in steps 66, for each candidate of available equalization methods, bit error rates (BER) BER0 to BERi are determined based on the obtained SNR0 to SNRi and a known or measured relationship between SNR and BER. This may be achieved by using a corresponding formula or reading the respective value from a lookup table (LUT) where SNR values and corresponding BER values are stored. Finally, in step 68, the equalization method with the minimum BER value is selected for the respective subband.

Thus, the BER-SNR relationship can be used for selecting the equalization method with the minimum BER, assuming that the respective SNR is obtained by a matched filtering width profile F(ω)=T(ω)/R(ω).

Fig. 7 shows a schematic block diagram of a whole adaptive coding and equalization process including the transmission and receiving side, according to a further embodiment.

In a first step 70, a broadband signal is transmitted through the transmission channel and the obtained PSD at the receiving side is analyzed in step 71 to obtain respective subband information which indicates the fading characteristic of the transmission channel. More specifically, the PSD or a fast Fourier transform (FFT) thereof can be analyzed to find minimum values of the transfer function. Based on these minimum values, the baud rate for the first subband can be obtained as the double frequency value of the first minimum value, the baud rate of the second subband can be obtained by subtracting the frequency value of the first minimum value from the frequency value of the second minimum value, and so on. Then, in step 72, a training sequence is transmitted for each subband, and based on an SNR distribution obtain by analyzing the training sequence, SNR calculation and selection of the respective equalization method is done in step 73. Then, in step 74, a modulation format is selected and the transmission power is adjusted based on the fading characteristic of each subband to obtain an optimum transmission performance for each subband. Finally, in step 75, the selected equalization method is applied and the actual BER value is obtained by counting bit errors.

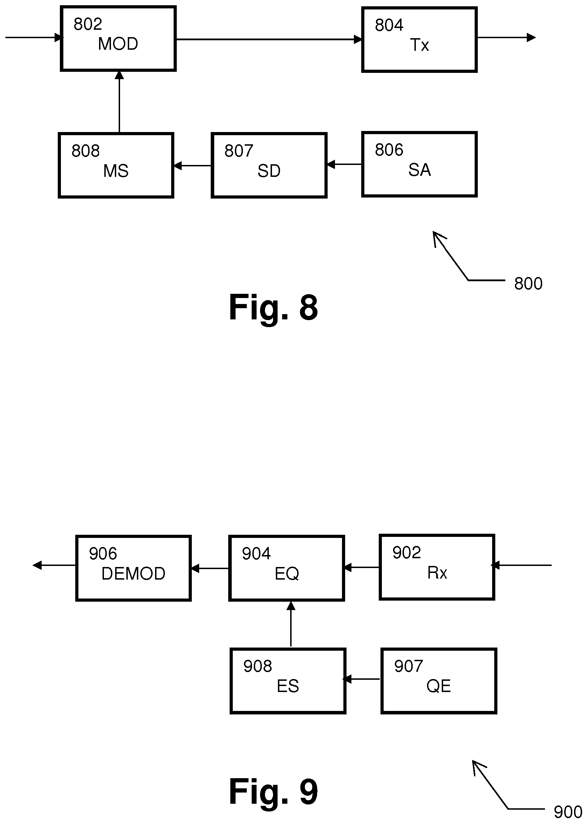

Fig. 8 shows a schematic block diagram of a transmitter device 800 according to a further embodiment.

A baseband transmission signal to be transmitted via the IMDD channel is modulated in a modulator 802 in accordance with a selected modulation format and is supplied to a transmitter (Tx) 804 in order to be transmitted via the IMDD channel. A spectrum analyzer (SA) 806 is provided to obtain a fading characteristic of a transmission spectrum available for the signal transmission. The fading characteristic obtained by the spectrum analyzer 806 is supplied to a spectrum divider (SD) 807 which is adapted to divide the available transmission spectrum into at least two subbands in accordance with the received fading characteristic. Then, a modulation selector (MS) 808 is adapted to select a modulation format for each of the at least two subbands based on the respective transmission characteristics of the subband. The modulation selector 808 controls the modulator 802 to provide the selected modulation format for each of the subbands. This can be achieved by supplying corresponding control signals to a signal processor which processes the base band signal to be supplied to respective IQ mixers similar to the schematic diagram of Fig. 5.

In a more specific example, the spectrum analyzer 806 may be adapted to initiate transmission of a broadband signal and to analyze a power spectrum obtained from the broadband signal to derive the fading characteristic which indicates the available subbands.

Furthermore, the modulation selector 808 may be adapted to determine at least a signal power spectrum and a noise power spectrum of each of the at least two subbands, and to select the modulation format for each of the at least two subbands based on a desired target power spectrum so as to obtain a desired data rate and transmission power. The modulation selector 808 may further be adapted to select the modulation format from a group comprising at least PAM, quadrature amplitude modulation (QAM), QPSK and BPSK.

Fig. 9 shows a schematic flow diagram of a receiver device 900 according to a futher preferred embodiment. A transmission signal received via a transmission channel is supplied to a receiver (Rx) 902 which is adapted to obtain a signal information conveyed by a transmission signal. The obtained signal information is supplied to an equalizer (EQ) 904 which processes the received information based on a selected equalization method in order to reduce the error rate of the received information and obtain a good SNR value. The processed signal is then supplied to a demodulator 906 which demodulates the received information in order to obtain the original base band signal. The selection of the equalization method used in the equalizer 904 is based on a quality estimator (QE) 907 which is adapted to estimate signal quality of the respective different modulation formats used on the at least two subbands of the available transmission spectrum. The estimated signal quality is then supplied to an equalization method selector (ES) 908 which is adapted to select the respective equalization method for each subband based on a comparison of the signal qualities estimated for the at least two subbands. According to a specific example, the quality estimator 907 may be adapted to calculate an SNR value for the different equalization methods. Then, the required signal qualities for each equalization method can be obtained by determining respective bit error rates for each of the different equalization methods, wherein the selector 908 may be adapted to select the equalization method which leads to a minimum BER in the respective subband.

Thus, according to the above embodiments, the modulation format and/or power is adjusted to meet the requirements of the transmission system, such as data rate and total transmission power. At the receiver side, the most suitable equalization method is chosen for each subband to improve system performance. In case of a transmission channel with fading characteristic, duo-binary equalization can be used to improve system performance. An extra de-mapping process may be needed to recover the signal after equalization to match the originally transmitted signal.

The proposed system-matched adaptive coding and equalization approach thus leads to the advantage that a lower PAPR can be provided and the number of subbands can be kept much smaller than in the conventional DMT system. Furthermore, the baud rate of the transmission signal of each subband can be adjusted in a flexible manner and high order modulation formats can be supported depending on the transfer characteristic of each subband.

In summary, the present invention relates to an apparatus and method for performing adaptive coding for signal transmission via a transmission system, wherein a fading characteristic of a transmission spectrum available for the signal transmission is obtained and the available transmission spectrum is divided into at least two subbands in accordance with the fading characteristic. Then, a modulation format for each of the at least two subbands is selected based on the transmission characteristic of the subband. At the receiver side, signal quality of the respective different modulation formats used on the at least two subbands of the available transmission spectrum is estimated and an equalization method for the signal reception is selected based on a comparison of signal qualities estimated for the at least two subbands.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to a person skilled in the art. Such modifications may involve other features which are already known in the art and which may be used instead of or in addition to features already described herein. In particular, the present invention can be applied to any transmission system where the available transmission spectrum can be divided into subbands due to respective minimums of the transfer characteristic. More specifically, the transmission system is not restricted to an optical transmission system. Rather, the present invention can be applied to any wired or wireless transmission system. The transmitter and receiver device of the proposed system can be implemented in discrete hardware or based on software routines for controlling signal processors at the transmission and reception side.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

Although the present invention has been described with reference to specific features and embodiments thereof, it is evident that various modifications and combinations can be made thereto without departing from the scope of the invention. The specification and drawings are, accordingly, to be regarded simply as an illustration of the invention as defined by the appended claims, and are contemplated to cover any and all modifications, variations, combinations or equivalents that fall within the scope of the appended claims.

### LIST OF ABBREVIATIONS

- BER: bit error rate
- BPSK: binary phase shift keying
- CD: chromatic dispersion
- DCF: dispersion compensation fiber
- DMT: discrete multi-tone
- EQ: equalizer
- ES: equalization method selector
- FFT: fast Fourier transform
- IM: intensity modulation
- IMDD: intensity modulation with direct detection
- IQ: in-phase and quadrature-phase
- ISI: inter-symbol interference
- LUT: lookup table
- MAN: metropolitan area network
- MLSE: maximum likelihood sequence estimation
- MS: modulation selectgion
- OSNR: optical SNR
- PAM: pulse amplitude modulation
- PAPR: peak to average power ration
- PR: partial response
- PSD: power spectrum densities
- QAM: quadrature amplitude modulation
- QE: qulity estimatior
- QPSK: quadrature phase shift keying
- Rx: receiver
- SA: spectrum analyzer
- SD: spectrum divider
- SNR: signal-to-noise ration
- Tx: transmitter
- WDM: wavelength division multiplexing

## Claims

1. An apparatus for performing adaptive duo-binary coding for signal transmission via a partial response, PR, transmission system, wherein in the PR transmission system, a PR channel is specified by a transfer function which is dependent on a delay operator D, said apparatus comprising:
a spectrum analyzer (806) for obtaining a fading characteristic of a transmission spectrum available for said signal transmission;
a spectrum divider (807) for dividing said available transmission spectrum into at least two subbands in accordance with said fading characteristic, wherein a power spectrum density, PSD, or a fast Fourier transform, FFT, of the PR channel is analyzed to find minimum values of the transfer function, based on these minimum values, the baud rate for the first subband is obtained as the double frequency value of a first minimum value, the baud rate of the second subband is obtained by subtracting the frequency value of the first minimum value from the frequency value of a second minimum value; and
a modulation selector (808) for selecting a modulation format for each of said at least two subbands based on a transmission characteristic of the subband.

2. The apparatus according to claim 1, wherein said spectrum analyzer (806) is adapted to initiate transmission of a broadband signal and to analyze a power spectrum obtained from said broadband signal to derive said fading characteristic.

3. The apparatus according to claim 1 or 2, wherein said modulation selector (808) is adapted to determine at least a signal power spectrum and noise power spectrum of each of said at least two subbands, and to select said modulation format for each of said at least two subbands based on a desired target power spectrum.

4. The apparatus according to any one of the preceding claims, wherein said modulation selector (808) is adapted to select said modulation format from a group comprising at least phase amplitude modulation, quadrature amplitude modulation, quadrature phase shift keying and binary phase shift keying.

5. An apparatus for performing adaptive duo-binary equalization for signal reception via a partial response, PR, transmission system, wherein in the PR transmission system, a PR channel is specified by a transfer function which is dependent on a delay operator D, said apparatus comprising:
a quality estimator (907) for estimating signal quality of respective different modulation formats used on at least two subbands of a transmission spectrum available for said signal reception, wherein a power spectrum density, PSD, or a fast Fourier transform, FFT, of the PR channel is analyzed to find minimum values of the transfer function, based on these minimum values, the baud rate for the first subband is obtained as the double frequency value of a first minimum value, the baud rate of the second subband is obtained by subtracting the frequency value of the first minimum value from the frequency value of a second minimum value; and
a selector (908) for selecting a duo-binary equalization method for said signal reception based on a comparison of signal qualities estimated for said at least two subbands.

6. The apparatus according to claim 5, wherein said quality estimator (907) is adapted to calculate a signal-to-noise ratio for said different equalization methods.

7. The apparatus according to claim 6, wherein said selector (908) is adapted to determine respective bit error rates for each of said different equalization methods and to select an equalization method which leads to a minimum bit error rate.

8. The apparatus according to claim 7, wherein said selector (908) is adapted to determine said bit error rates by using a look-up table in which signal-to-noise ratios and related bit error rates are stored for said different equalization methods.

9. The apparatus according to any one of claims 5 to 8, wherein said different equalization methods comprise a duo-binary equalization.

10. A transmitter device (800) comprising the apparatus according to any one of claims 1 to 4.

11. A receiver device (900) comprising the apparatus according to any one of claims 5 to 9.

12. A transmission system comprising at least one transmitter device (800) according to claim 10 and at least one receiver device (900) according to claim 11.

13. A method of performing adaptive duo-binary coding for signal transmission via a partial response, PR, transmission system, wherein in the PR transmission system, a PR channel is specified by a transfer function which is dependent on a delay operator D, said method comprising:
obtaining a fading characteristic of a transmission spectrum available for said signal transmission;
dividing said available transmission spectrum into at least two subbands in accordance with the fading characteristic, wherein a power spectrum density, PSD, or a fast Fourier transform, FFT, of the PR channel is analyzed to find minimum values of the transfer function, based on these minimum values, the baud rate for the first subband is obtained as the double frequency value of a first minimum value, the
baud rate of the second subband is obtained by subtracting the frequency value of the first minimum value from the frequency value of a second minimum value; and
selecting a modulation format for each of said at least two subbands based on a transmission characteristic of the subband.

14. A method of performing adaptive duo-binary equalization for signal reception via a partial response, PR, transmission system, wherein in the PR transmission system, a PR channel is specified by a transfer function which is dependent on a delay operator D, said method comprising:
estimating signal quality of respective different modulation formats used on at least two subbands of a transmission spectrum available for said signal reception, wherein a power spectrum density, PSD, or a fast Fourier transform, FFT, of the PR channel is analyzed to find minimum values of the transfer function, based on these minimum values, the baud rate for the first subband is obtained as the double frequency value of a first minimum value, the baud rate of the second subband is obtained by subtracting the frequency value of the first minimum value from the frequency value of a second minimum value; and
selecting a duo-binary equalization method for said signal reception based on a comparison of signal qualities estimated for said at least two subbands.

15. A computer program comprising instructions which, when the program is executed by a computer, cause the computer to carry out the steps of method of claims 13 or 14.

## Patentansprüche

1. Einrichtung zum Ausführen adaptiver duobinärer Codierung zur Signalübertragung über ein "Partial Response"-Übertragungssystem, PR-Übertragungssystem, wobei in dem PR-Übertragungssystem ein PR-Kanal durch eine Übertragungsfunktion, die von einem Verzögerungsoperator D abhängig ist, spezifiziert ist, wobei die Einrichtung Folgendes umfasst:
einen Spektrumsanalysator (806) zum Erhalten einer Schwundcharakteristik eines Übertragungsspektrums, das für die Signalübertragung verfügbar ist;
einen Spektrumsteiler (807) zum Aufteilen des verfügbaren Übertragungsspektrums in wenigstens zwei Teilbänder in Übereinstimmung mit der Schwundcharakteristik, wobei eine Leistungsspektrumsdichte, PSD, oder eine schnelle Fourier-Transformation, FFT, des PR-Kanals analysiert wird, um Minimalwerte der Übertragungsfunktion zu finden, basierend auf diesen Minimalwerten die Baud-Rate für das erste Teilband als der doppelte Frequenzwert eines ersten Minimalwerts erhalten wird, die Baud-Rate des zweiten Teilbands durch Subtrahieren des Frequenzwerts des ersten Minimalwerts von dem Frequenzwert eines zweiten Minimalwerts erhalten wird; und
einen Modulationsselektor (808) zum Auswählen eines Modulationsformats für jedes der wenigstens zwei Teilbänder basierend auf einer Übertragungscharakteristik des Teilbands.

2. Einrichtung nach Anspruch 1, wobei der Spektrumsanalysator (806) ausgelegt ist, die Übertragung eines Breitbandsignals zu initiieren und ein Leistungsspektrum, das aus dem Breitbandsignal erhalten wird, zu analysieren, um die Schwundcharakteristik abzuleiten.

3. Einrichtung nach Anspruch 1 oder 2, wobei der Modulationsselektor (808) ausgelegt ist, wenigstens ein Signalleistungsspektrum und ein Rauschleistungsspektrum jedes der wenigstens zwei Teilbänder zu bestimmen und das Modulationsformat für jedes der wenigstens zwei Teilbänder basierend auf einem gewünschten Zielleistungsspektrum auszuwählen.

4. Einrichtung nach einem der vorhergehenden Ansprüche, wobei der Modulationsselektor (808) ausgelegt ist, das Modulationsformat aus einer Gruppe auszuwählen, die wenigstens Phasenamplitudenmodulation, Quadratamplitudenmodulation, Quadratur-Phasenumtastung und Binär-Phasenumtastung umfasst.

5. Einrichtung zum Ausführen adaptiver duobinärer Entzerrung für Signalempfang über ein "Partial Response"-Übertragungssystem, PR-Übertragungssystem, wobei in dem PR-Übertragungssystem ein PR-Kanal durch eine Übertragungsfunktion, die von einem Verzögerungsoperator D abhängig ist, spezifiziert ist, wobei die Einrichtung Folgendes umfasst:
eine Qualitätschätzeinheit (907) zum Schätzen der Signalqualität jeweiliger unterschiedlicher Modulationsformate, die auf wenigstens zwei Teilbändern eines für den Signalempfang verfügbaren Übertragungsspektrums verwendet werden, wobei eine Leistungsspektrumsdichte, PSD, oder eine schnelle Fourier-Transformation, FFT, des PR-Kanals analysiert wird, um Minimalwerte der Übertragungsfunktion zu finden, basierend auf diesen Minimalwerten die Baud-Rate für das erste Teilband als der doppelte Frequenzwert eines ersten Minimalwerts erhalten wird, die Baud-Rate des zweiten Teilbands durch Subtrahieren des Frequenzwerts des ersten Minimalwerts von dem Frequenzwert eines zweiten Minimalwerts erhalten wird; und
einen Selektor (908) zum Auswählen eines duobinären Entzerrungsverfahrens für den Signalempfang basierend auf einem Vergleich von Signalqualitäten, die für die wenigstens zwei Teilbänder geschätzt sind.

6. Einrichtung nach Anspruch 5, wobei die Qualitätschätzeinheit (907) ausgelegt ist, ein Signal-Rausch-Verhältnis für die unterschiedlichen Entzerrungsverfahren zu berechnen.

7. Einrichtung nach Anspruch 6, wobei der Selektor (908) ausgelegt ist, jeweilige Bitfehlerraten für jedes der unterschiedlichen Entzerrungsverfahren zu bestimmen und ein Entzerrungsverfahren, das zu einer kleinsten Bitfehlerrate führt, auszuwählen.

8. Einrichtung nach Anspruch 7, wobei der Selektor (908) ausgelegt ist, die Bitfehlerraten unter Verwendung einer Nachschlagetabelle, in der Signal-Rausch-Verhältnisse und zugehörige Bitfehlerraten für die unterschiedlichen Entzerrungsverfahren gespeichert sind, zu bestimmen.

9. Einrichtung nach einem der Ansprüche 5 bis 8, wobei die unterschiedlichen Entzerrungsverfahren eine duobinäre Entzerrung umfassen.

10. Sendervorrichtung (800), die die Einrichtung nach einem der Ansprüche 1 bis 4 umfasst.

11. Empfängervorrichtung (900), die die Einrichtung nach einem der Ansprüche 5 bis 9 umfasst.

12. Übertragungssystem, das wenigstens eine Sendervorrichtung (800) nach Anspruch 10 und wenigstens eine Empfängervorrichtung (900) nach Anspruch 11 umfasst.

13. Verfahren zum Ausführen adaptiver duobinärer Codierung zur Signalübertragung über ein "Partial Response"-Übertragungssystem, PR-Übertragungssystem, wobei in dem PR-Übertragungssystem ein PR-Kanal durch eine Übertragungsfunktion, die von einem Verzögerungsoperator D abhängig ist, spezifiziert ist, wobei das Verfahren Folgendes umfasst:
Erhalten einer Schwundcharakteristik eines Übertragungsspektrums, das für die Signalübertragung verfügbar ist;
Aufteilen des verfügbaren Übertragungsspektrums in wenigstens zwei Teilbänder in Übereinstimmung mit der Schwundcharakteristik, wobei eine Leistungsspektrumsdichte, PSD, oder eine schnelle Fourier-Transformation, FFT, des PR-Kanals analysiert wird, um Minimalwerte der Übertragungsfunktion zu finden, basierend auf diesen Minimalwerten die Baud-Rate für das erste Teilband als der doppelte Frequenzwert eines ersten Minimalwerts erhalten wird, die Baud-Rate des zweiten Teilbands durch Subtrahieren des Frequenzwerts des ersten Minimalwerts von dem Frequenzwert eines zweiten Minimalwerts erhalten wird; und
Auswählen eines Modulationsformats für jede der wenigstens zwei Teilbänder basierend auf einer Übertragungscharakteristik des Teilbands.

14. Verfahren zum Ausführen adaptiver duobinärer Entzerrung zum Signalempfang über ein "Partial Response"-Übertragungssystem, PR-Übertragungssystem, wobei in dem PR-Übertragungssystem ein PR-Kanal durch eine Übertragungsfunktion, die von einem Verzögerungsoperator D abhängig ist, spezifiziert ist, wobei das Verfahren Folgendes umfasst:
Schätzen der Signalqualität jeweiliger unterschiedlicher Modulationsformate, die auf wenigstens zwei Teilbändern eines für den Signalempfang verfügbaren Übertragungsspektrums verwendet werden, wobei eine Leistungsspektrumsdichte, PSD, oder eine schnelle Fourier-Transformation, FFT, des PR-Kanals analysiert wird, um Minimalwerte der Übertragungsfunktion zu finden, basierend auf diesen Minimalwerten die Baud-Rate für das erste Teilband als der doppelte Frequenzwert eines ersten Minimalwerts erhalten wird, die Baud-Rate des zweiten Teilbands durch Subtrahieren des Frequenzwerts des ersten Minimalwerts von dem Frequenzwert eines zweiten Minimalwerts erhalten wird; und
Auswählen eines duobinären Entzerrungsverfahrens für den Signalempfang basierend auf einem Vergleich von Signalqualitäten, die für die wenigstens zwei Teilbänder geschätzt sind.

15. Computerprogramm, das Anweisungen umfasst, die, wenn das Programm durch einen Computer ausgeführt wird, den Computer veranlassen, die Schritte des Verfahrens der Ansprüche 13 oder 14 auszuführen.

## Revendications

1. Appareil pour réaliser un codage binaire double adaptatif pour l'émission de signal par l'intermédiaire d'un système d'émission à réponse partielle, PR, dans lequel, dans le système d'émission PR, un canal PR est spécifié par une fonction de transfert qui dépend d'un opérateur de retard D, ledit appareil comprenant :
un analyseur de spectre (806) pour obtenir une caractéristique d'évanouissement d'un spectre d'émission disponible pour ladite émission de signal ;
un diviseur de spectre (807) pour diviser ledit spectre d'émission disponible en au moins deux sous-bandes conformément à ladite caractéristique d'évanouissement, dans lequel une densité spectrale de puissance, PSD, ou une transformée de Fourier rapide, FFT, du canal PR est analysée pour trouver des valeurs minimales de la fonction de transfert, sur la base de ces valeurs minimales, le débit de transmission pour la première sous-bande est obtenu comme étant le double de la valeur de fréquence d'une première valeur minimale, le débit de transmission de la deuxième sous-bande est obtenu en soustrayant la valeur de fréquence de la première valeur minimale à la valeur de fréquence d'une deuxième valeur minimale ; et
un sélecteur de modulation (808) pour sélectionner un format de modulation pour chacune desdites au moins deux sous-bandes sur la base d'une caractéristique d'émission de la sous-bande.

2. Appareil selon la revendication 1, dans lequel ledit analyseur de spectre (806) est conçu pour déclencher l'émission d'un signal à large bande et pour analyser un spectre de puissance obtenu à partir dudit signal à large bande pour en déduire ladite caractéristique d'évanouissement.

3. Appareil selon la revendication 1 ou 2, dans lequel ledit sélecteur de modulation (808) est conçu pour déterminer au moins un spectre de puissance de signal et un spectre de puissance de bruit de chacune desdites au moins deux sous-bandes, et pour sélectionner ledit format de modulation pour chacune desdites au moins deux sous-bandes sur la base d'un spectre de puissance cible souhaité.

4. Appareil selon l'une quelconque des revendications précédentes, dans lequel ledit sélecteur de modulation (808) est conçu pour sélectionner ledit format de modulation à partir d'un groupe comprenant au moins la modulation d'amplitude et de phase, la modulation d'amplitude en quadrature, la modulation par déplacement de phase en quadrature et la modulation par déplacement de phase binaire.

5. Appareil pour réaliser une égalisation binaire double adaptative pour la réception de signal par l'intermédiaire d'un système d'émission PR à réponse partielle, dans lequel, dans le système d'émission PR, un canal PR est spécifié par une fonction de transfert qui dépend d'un opérateur de retard D, ledit appareil comprenant :
un estimateur de qualité (907) pour estimer la qualité de signal de différents formats de modulation respectifs utilisés sur au moins deux sous-bandes d'un spectre d'émission disponible pour ladite réception de signal, dans lequel une densité spectrale de puissance, PSD, ou une transformée de Fourier rapide, FFT, du canal PR est analysée pour trouver des valeurs minimales de la fonction de transfert, sur la base de ces valeurs minimales, le débit de transmission pour la première sous-bande est obtenu comme étant le double de la valeur de fréquence d'une première valeur minimale, le débit de transmission de la deuxième sous-bande est obtenu en soustrayant la valeur de fréquence de la première valeur minimale à la valeur de fréquence d'une deuxième valeur minimale ; et
un sélecteur (908) pour sélectionner un procédé d'égalisation binaire double pour ladite réception de signal sur la base d'une comparaison des qualités de signal estimées pour lesdites au moins deux sous-bandes.

6. Appareil selon la revendication 5, dans lequel ledit estimateur de qualité (907) est conçu pour calculer un rapport signal sur bruit pour lesdits différents procédés d'égalisation.

7. Procédé selon la revendication 6, dans lequel ledit sélecteur (908) est conçu pour déterminer des taux d'erreurs sur les bits respectifs pour chacun desdits différents procédés d'égalisation et pour sélectionner un procédé d'égalisation qui conduit à un taux d'erreurs sur les bits minimal.

8. Appareil selon la revendication 7, dans lequel ledit sélecteur (908) est conçu pour déterminer lesdits taux d'erreurs sur les bits en utilisant une table de consultation dans laquelle des rapports signal sur bruit et des taux d'erreurs sur les bits associés sont stockés pour lesdits différents procédés d'égalisation.

9. Appareil selon l'une quelconque des revendications 5 à 8, dans lequel lesdits différents procédés d'égalisation comprennent une égalisation binaire double.

10. Dispositif émetteur (800) comprenant l'appareil selon l'une quelconque des revendications 1 à 4.

11. Dispositif récepteur (900) comprenant l'appareil selon l'une quelconque des revendications 5 à 9.

12. Système d'émission comprenant au moins un dispositif émetteur (800) selon la revendication 10 et au moins un dispositif récepteur (900) selon la revendication 11.

13. Procédé pour réaliser un codage binaire double adaptatif pour l'émission de signal par l'intermédiaire d'un système d'émission à réponse partielle, PR, dans lequel, dans le système d'émission à réponse partielle, un canal PR est spécifié par une fonction de transfert qui dépend d'un opérateur de retard D, ledit procédé comprenant :
l'obtention d'une caractéristique d'évanouissement d'un spectre d'émission disponible pour ladite émission de signal ;
la division dudit spectre d'émission disponible en au moins deux sous-bandes conformément à la caractéristique d'évanouissement, dans lequel une densité spectrale de puissance, PSD, ou une transformée de Fourier rapide, FFT, du canal PR est analysée pour trouver des valeurs minimales de la fonction de transfert, sur la base de ces valeurs minimales, le débit de transmission pour la première sous-bande est obtenu comme étant le double de la valeur de fréquence d'une première valeur minimale, le débit de transmission de la deuxième sous-bande est obtenu en soustrayant la valeur de fréquence de la première valeur minimale à la valeur de fréquence d'une deuxième valeur minimale ; et
la sélection d'un format de modulation pour chacune desdites au moins deux sous-bandes sur la base d'une caractéristique d'émission de la sous-bande.

14. Procédé pour réaliser une égalisation binaire double adaptative pour la réception de signal par l'intermédiaire d'un système d'émission à réponse partielle, PR, dans lequel, dans le système d'émission à réponse partielle, un canal PR est spécifié par une fonction de transfert qui dépend d'un opérateur de retard D, ledit procédé comprenant : l'estimation d'une qualité de signal de différents formats de modulation respectifs utilisés sur au moins deux sous-bandes d'un spectre d'émission disponible pour ladite réception de signal, dans lequel une densité spectrale de puissance, PSD, ou une transformée de Fourier rapide, FFT, du canal PR est analysée pour trouver des valeurs minimales de la fonction de transfert, sur la base de ces valeurs minimales, le débit de transmission pour la première sous-bande est obtenu comme étant le double de la valeur de fréquence d'une première valeur minimale, le débit de transmission de la deuxième sous-bande est obtenu en soustrayant la valeur de fréquence de la première valeur minimale à la valeur de fréquence d'une deuxième valeur minimale ; et
la sélection d'un procédé d'égalisation binaire double pour ladite réception de signal sur la base d'une comparaison de qualités de signal estimées pour lesdites au moins deux sous-bandes.

15. Programme d'ordinateur comprenant des instructions qui, lorsque le programme est exécuté par un ordinateur, conduisent l'ordinateur à mettre en œuvre les étapes de procédé selon les revendications 13 ou 14.
